# EUROPÄISCHE PATENTSCHRIFT

(11) **EP 1 097 070 B1**
(45) Veröffentlichungstag und Bekanntmachung des Hinweises auf die Patenterteilung: **12.10.2005**
(21) Anmeldenummer: 99934573.9
(22) Anmeldetag: 05.07.1999
(51) Int. Cl.: B60T 8/36

(54) **HYDRAULIKAGGREGAT**
HYDRAULIC UNIT
GROUPE HYDRAULIQUE

(30) Priorität: 16.07.1998 DE 19831844; 10.11.1998 DE 19851762
(43) Veröffentlichungstag der Anmeldung: 09.05.2001
(73) Patentinhaber: Continental Teves AG & Co. oHG, 60488 Frankfurt am Main (DE)
(72) Erfinder: DINKEL, Dieter, D-65817 Eppstein (DE); RISCH, Stephan, D-64331 Weiterstadt (DE)
(86) Internationale Anmeldenummer: PCT/EP1999/004664
(87) Internationale Veröffentlichungsnummer: WO 2000/003902

(56) Entgegenhaltungen:
- EP-A- 0 373 551
- EP-A- 0 770 530
- WO-A-92/12878
- WO-A-94/12375
- WO-A-94/27045
- WO-A-96/13416
- WO-A-96/20856
- WO-A-97/48583
- DE-A- 4 234 013
- PATENT ABSTRACTS OF JAPAN vol. 096, no. 005, 31. Mai 1996 (1996-05-31) & JP 08 011709 A (AISIN SEIKI CO LTD), 16. Januar 1996 (1996-01-16)

## Beschreibung

Die Erfindung betrifft ein Hydraulikaggregat für eine hydraulische Steuer- und/oder Regelvorrichtung, insbesondere für blockierschutz- und/oder schlupfgeregelte Bremsanlagen, mit einer in einem Reglergehäuse angeordneten Steuer- und Regelelektronik sowie mit einem mit dem Reglergehäuse verbundenen Ventilblock, an dem wenigstens ein Antriebsmittel für mindestens ein Druckerzeugerelement angeordnet ist, wobei in dem Ventilblock ein dem Druckerzeugerelement zugeordneter Hohlraum Leckageflüssigkeit des Druckerzeugerelements aufnimmt und ein mit dem Hohlraum verbundener Ablaufkanal vorgesehen ist.

Aus der DE 42 34 013 A1 ist bereits ein Hydraulikaggregat der angegebenen Art bekannt. Hydraulikaggregate der neuesten Generation sind modular aufgebaut und bestehen im wesentlichen aus den hydraulischen Komponenten Pumpe, Niederdruckspeicher, Magnetventile und einem Antriebsmittel für die Pumpe. Im elektronischen Reglergehäuse angeordnete integrierte Spulen werden direkt auf die Magnetventile aufgesteckt und an dem Ventilblock befestigt. Dabei ist in dem Ventilblock ein, von der Antriebswelle eines Antriebsmittels angetriebener, Exzenter vorgesehen, über welchen die Druckerzeugerelemente betätigt werden. Die Druckerzeugerelemente sind mittels elastischer Dichtungen gegenüber dem Hohlraum des Exzenters abgedichtet, jedoch lassen sich Leckagen bei Drücken bis 250 bar nicht immer vermeiden. Es ist daher zum Ablauf der Leckageflüssigkeit der Druckerzeugerelemente im Ventilblock ein Ablaufkanal vorgesehen. Über den Ablaufkanal fließt die Leckageflüssigkeit zu der Außenwand des Ventilblocks, an der das Reglergehäuse befestigt ist. Es wären nunmehr Einbauorte und Einbaulagen des Hydraulikaggregats wünschenswert, um die Spezifikationen zur Funktionstüchtigkeit der Bremsanlage, beispielsweise einem Spritzwassertest, gerecht zu werden. Diese können jedoch infolge der komplexen Aggregateanordnung im Gesamtverbund eines Kraftfahrzeuges und der hohen Integrationsdichte der Systeme im Kraftfahrzeug nicht immer erfüllt werden. In den Ventil-, Pumpen-, Motor- und Druckspeicherraum eindringendes Salz bzw. Wasser führt zur Ansammlung und ggf. Überflutung der Hohlräume. Funktionsstörungen können dabei mit Sicherheit nicht ausgeschlossen werden. Zur Erfüllung dieser Funktionstüchtigkeit sind besondere Maßnahmen erforderlich, die das Aggregat in der Regel verteuern.

Um diesen Gegebenheiten entgegenzuwirken ist es bekannt, das Reglergehäuse mittels einer Dichtung gegenüber dem Ventilblock abzudichten. Die Dichtung ist dabei in üblicher Weise in einer Ausnehmung der Reglerwand fixiert.

Dabei ergibt sich eine über die gesamte Abmessung des Ventilblocks erstreckende Dichtfläche, deren Funktionalität bei den späteren alltäglichen Anforderungen nur unter großem Aufwand gewährleistet werden kann. Darüber hinaus muß ein derartiges Aggregat be- und entlüftet werden, was das Aggregat zusätzlich verteuert.

Aus der WO 97/48583 ist eine Radialkolbenpumpe für eine Kraftfahrzeugbremsanlage mit einem Gehäuse zur Aufnahme von Pumpenkolben, sowie mit einem Pumpenantrieb bestehend aus einem Elektromotor bekannt. Druckmittelleckage des Pumpenkolbens wird unter Schwerkraft- und/oder Fliehkraftwirkung in wenigstens einem, an die Gehäuseöffnung angrenzenden, Auffangraum gespeichert.
Die EP 0 770 530 A2 beschreibt ein Hydraulikaggregat mit einem aufwändig gestalteten Dichtungselement als Abdeckung für Speicheröffnungen. Das Dichtungselement soll verhindern, dass von außen eindringende Flüssigkeit wie insbesondere Wasser in Speicheraufnahmebohrungen Korrosion oder infolge Korrosionsprodukten zu schwergängigen oder blockierten Speicherkolben führt.

Es ist eine Aufgabe der Erfindung, ein Hydraulikaggregat zu schaffen, das kostenreduziert ein Eindringen eines Fluids in den Ablaufkanal sicher verhindert und gleichzeitig ein Abfließen der Leckageflüssigkeit aus dem Ablaufkanal und dem Reglergehäuse ermöglicht.

Diese Aufgabe wird erfindungsgemäß mit den Merkmalen von Patentanspruch 1 gelöst, indem ein rohrförmig ausgebildetes Mittel vorgesehen ist, das den Ablaufkanal über ein Reservoir, das ein saugendes Medium für die Aufnahme von Leckageflüssigkeit aufweist, mit einem Innenraum des Reglergehäuses verbindet. Die Erfindung basiert somit auf dem Gedanken, Ventilblock und Reglergehäuse ohne dazwischenliegende Dichtung zu verbinden, um die Befestigung des Reglergehäuses am Ventilblock einfacher und kostengünstiger gestalten zu können, wobei das dem Ablaufkanal für die Leckageflüssigkeit innerhalb des Gehäuseraums zugeordnete rohrförmige Mittel das Eindringen eines Fluids, z.B. Wasser, in den Ablaufkanal verhindert.

Durch diese Maßnahmen werden die späteren alltäglichen Anforderungen im Betrieb-berücksichtigt, da die Leckageflüssigkeit nicht über den Motorraum eines Kraftfahrzeugs abgeführt wird, was von dem Benutzer des Kraftfahrzeuges falsch gedeutet werden könnte.

In weiterer Präzisierung des Erfindungsgedankens ist die Oberfläche des Mediums nach außen flüssigkeitsabweisend imprägniert. Dabei kann als saugendes Medium zur Aufnahme der Flüssigkeit insbesondere Filz verwendet werden, dessen Oberfläche das Eindringen eines Fluids mit niedrigerer Viskosität verhindert.

In Ausgestaltung der Erfindung ist das Mittel einstückig mit dem Reglergehäuse oder lösbar mit dem Ventilblock verbunden. Ein Mittel für den Ablaufkanal eines Hydraulikaggregates, welches rohrförmig ausgebildet ist, kann folglich vorteilhaft als separates Einzelteil gefertigt und als Zukaufteil montiert werden. Insgesamt ergeben sich fertigungstechnisch zwei besonders einfache Maßnahmen zur Herstellung der erforderlichen Mittel, wobei eine besonders zuverlässige, leicht zu montierende und kostengünstige Lösung des Problems durch die einstückig mit dem Reglergehäuse verbundene Variante vorliegt. Eine weiterhin besonders einfache Montage und Demontage des Mittels wird erreicht, indem das Mittel in dem Ablaufkanal positioniert ist. Dies ist insbesondere bei der rohrförmigen Ausbildung des Mittels besonders einfach und kostengünstig zu realisieren, wenn der Durchmesser des Mittels dem Durchmesser des Ablaufkanals entspricht. Besonders kostengünstig ist dies mit einem Kunststoffrohr zu erreichen, welches in den Ablaufkanal einsteckbar ist.

Bei einer anderen Lösung des Problems nach dem nebengeordneten Anspruch 7 ist ein rohrförmig ausgebildetes Mittel vorgesehen, das den Ablaufkanal (16) über ein Absperrorgan mit einem Innenraum-des Reglergehäuses verbindet. Bei dem Absperrorgan handelt es sich vorzugsweise um ein Ventil, welches bei Bedarf das Eindringen eines Fluids sicher verhindert.

Abtropfkanten, die zweckmäßigerweise an dem Mittel vorgesehen sind, leiten das Fluid an einer vorgegebenen Stelle ab und sichern somit definierte Fluidströme.

Weitere Ziele, Merkmale, Vorteile und Anwendungsmöglichkeiten der vorliegenden Erfindung ergeben sich aus der nachfolgenden Beschreibung der Ausführungsbeispiele.

Die Figuren 1 bis 4 dienen lediglich zur allgemeinen Verdeutlichung der Zusammenhänge. Erfindungsgemäße ausführungsformen sind in den Fig. 5 bis 8 dargestellt. Im Einzelnen zeigt:
- Fig. 1: einen im Ventilblock vorgesehenen und in den Innenraum des Reglergehäuses mündenden Ablaufkanal, dem ein einstückig mit dem Reglergehäuse verbundenes Mittel zum Ableiten eines Fluids zugeordnet ist,
- Fig. 2: ein in einem Ablaufkanal positioniertes rohrförmiges Mittel,
- Fig. 3: ein abgewinkeltes rohrförmiges Mittel,
- Fig. 4: ein Abtropfkanten aufweisendes rohrförmiges Mittel,
- Fig. 5: eine Ausführungsform mit einem ein Reduzierstück aufweisenden Mittel,
- Fig. 6: eine Ausführungsform mit einem unter einem Winkel verlaufenden rohrförmigen Mittel,
- Fig. 7: eine Ausführungsform mit in dem Mittel angeordnetem Ventil, und
- Fig. 8: eine Ausführungsform mit an dem Mittel vorgesehenen Reservoir.

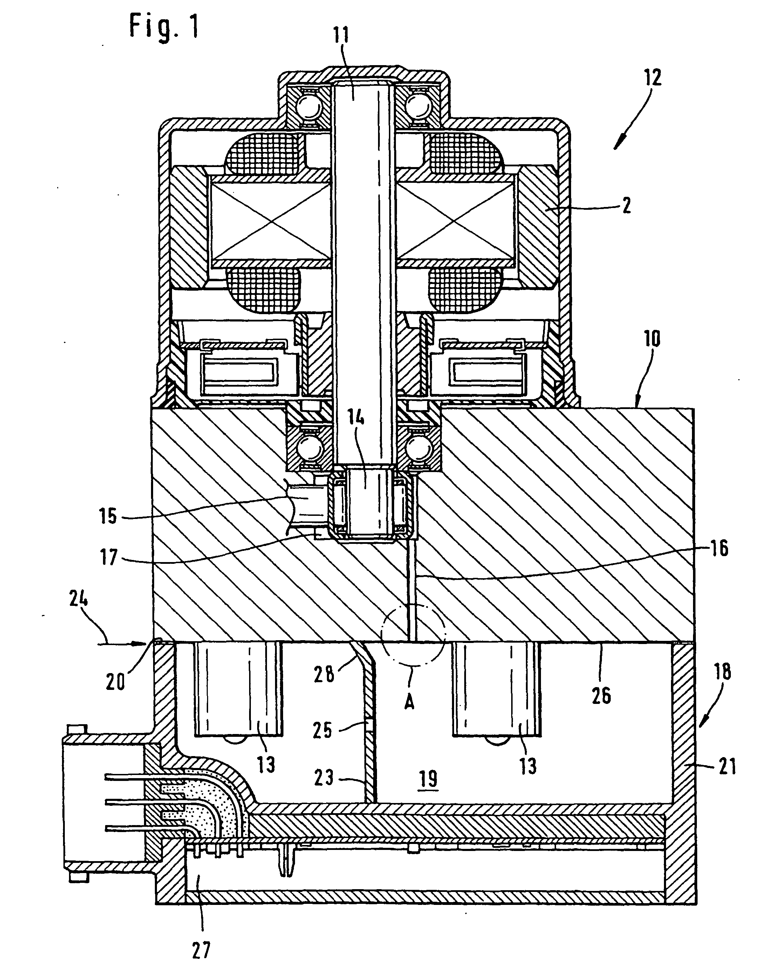

Die Fig. 1 zeigt ein Hydraulikaggregat mit einem im Schnitt dargestellten Ventilblock 10 zur Lagerung des Antriebsmittels 12, der Ventilelemente 13 und der nicht näher dargestellten Druckerzeugerelemente 15 einer Pumpe. Das Antriebsmittel 12 besteht aus einem Gleichstrommotor, dessen Rotor an einem Wellenende in einem topfförmigen Gehäuse gelagert ist und dessen weiteres Lager in einer Sackbohrung des Ventilblocks 10 geführt ist. Dieses Lager für die Welle 11 des Antriebsmittels 12 liegt in Nähe des Wellenexzenterzapfens 14, der zur Betätigung mindestens eines kolbenförmigen Druckerzeugerelementes 15 ein Nadellager aufweist. Ein im Durchmesser kleiner Ablaufkanal 16 schließt sich der Lagerstelle des Antriebselementes 2 im Ventilblock 10 an. Über diesen Ablaufkanal 16 wird in den Hohlraum 17 eindringende Leckageflüssigkeit des Druckerzeugerelementes 15 bis zur Oberfläche 26 des Ventilblocks 10 abgeführt. Mit dieser Oberfläche 26. des Ventilblocks 10 ist ein Reglergehäuse 18 verbunden, das die Ventilelemente 13 atmungsaktiv umschließt. Zur Aufnahme von elektrischen bzw. elektronischen Komponenten ist der Innenraum 19 unterteilt. Der die Ventilelemente 13 aufnehmende Innenraum ist wannenartig ausgebildet und steht über die Unregelmäßigkeiten aufweisende Befestigungsfläche 20 der Wand 21 mit dem Umgebungsmedium in Verbindung. Der die elektrischen bzw. elektronischen Komponenten aufnehmende Raum 27 ist gegenüber dem Innenraum 19 flüssigkeitsundurchlässig, so daß unter allen Betriebszuständen das Eindringen von Flüssigkeit in den feuchteund schmutzempfindlichen Bereich des Reglergehäuses verhindert ist. Die aus dem Hohlraum 17 abfließende Leckageflüssigkeit wird von dem Innenraum 19 aufgenommen und kann über die undichte Befestigungsfläche 20 zwischen dem Reglergehäuse 18 und dem Ventilblock 10 abfließen.
Insbesondere bei waagrechter oder schräger Einbaulage des Hydraulikaggregates zur Motorachse wirkt die Oberfläche des Hydraulikaggregates als Auffangelement, das Flüssigkeiten wie Wasser oder mit Zusätzen versehenes Wasser, direkt zu der Befestigungsfläche 20 leitet. Dabei können größere Flüssigkeitsströme auftreten, die entlang der Oberfläche des Ventilblocks in den Innenraum 19 und in Richtung des bevorzugt senkrecht zur Oberfläche verlaufenden Ablaufkanals 16 fließen.

Ein in dem Innenraum 19 als Steg ausgebildetes Mittel 23 ist einstückig mit dem Reglergehäuse verbunden. Der wandoder dachförmige ausgebildete Steg weist einen zur Oberfläche 26 unter einer Schräge 28 verlaufenden Abschnitt auf, der an der Oberfläche 26 des Ventilblocks 10 anliegt. Durch eine entsprechend gewählte Dicke des Mittels 23 ergibt sich eine Elastizität über die Längsachse des Mittels 23, die bei einem über die Wand 21 des Reglergehäuses 18 hervorstehenden Abschnitt 28 bei der Befestigung des Reglergehäuses an der Oberfläche 26 zu einer Vorspannung des Mittels 23 führt. Dabei legt sich das Mittel 23 mit dem Abschnitt 28 fest an die Oberfläche 26 des Ventilblocks 10 an und leitet die in Strömungsrichtung 24 fließende Flüssigkeit von der Oberfläche 26 des Ventilblocks 10 zu einer in dem Mittel 23 vorgesehenen Öffnung 25. Die Flüssigkeit fließt durch diese Öffnung 25 definiert zu der gegenüberliegenden Befestigungsfläche 20 der Wand 21, und über die Befestigungsfläche 20 in die Umgebung.
Spezielle Ablauföffnungen, die mit nicht näher dargestellten Ablaufelementen, wie Ablaufschläuchen verbunden sind, ermöglichen einen Transport der Leckageflüssigkeit zu einer definierten Stelle eines Kraftfahrzeugs.

Durch das Mittel 23 ist sichergestellt, daß die Flüssigkeit nicht in den Ablaufkanal 16 für die Leckageflüssigkeit eindringen kann, da sie über das Mittel 23 abgeleitet wird. Der Ablaufkanal 16 kann durch das Mittel 23 senkrecht zur Oberfläche 26 in dem Ventilblock 10 angeordnet werden.

Der in Fig. 1 dargestellte wandartige Steg 23 kann nach einer nicht näher dargestellten Ausführungsform auch rohrförmig den Ablaufkanal 16 umgeben, damit unabhängig von der Einbaulage des Hydraulikaggregates der Ablaufkanal 16 gegen das Eindringen der Flüssigkeit geschützt ist, welche dann unabhängig von der Strömungsrichtung 24 immer sicher abgeleitet wird.

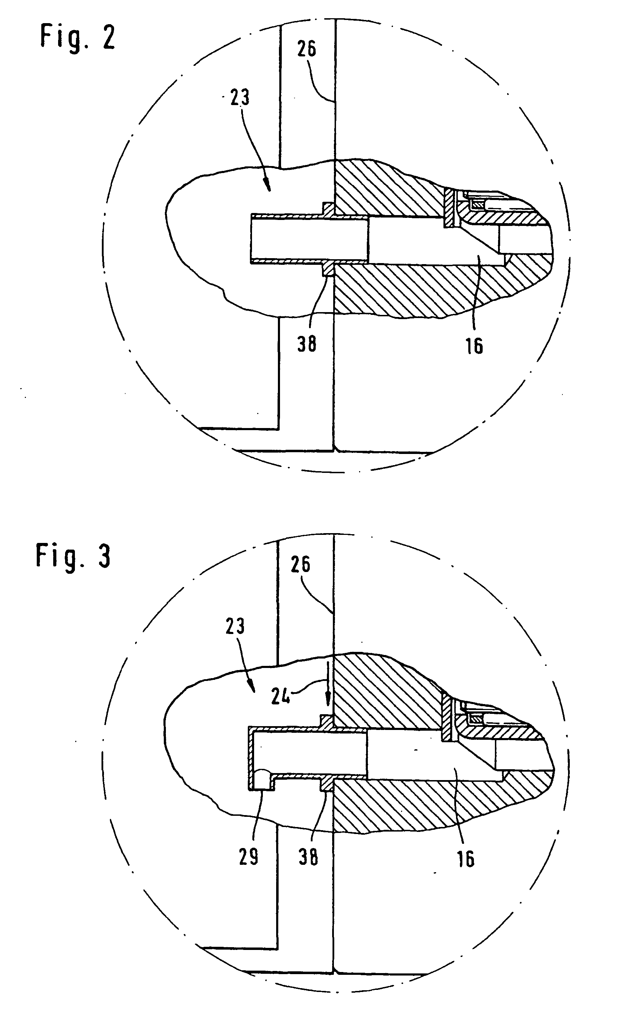

Der Abschnitt A der Fig. 1 ist in den Fig. 2 bis 8 vergrößert dargestellt und zeigt schematisch alternative Ausführungsformen des Mittels 23.

Die Fig. 2 zeigt alternativ gegenüber Fig. 1 bei weitgehend gleicher Funktion am Ventilblock 10, eine Abwandlung des Mittels 23, wozu im Gegensatz zu Fig. 1, in Fig. 2 ein rohrförmiges Mittel 23 lösbar in dem Ablaufkanal 16 formschlüssig positioniert ist. Damit ergibt sich vorteilhaft eine Verlängerung des Ablaufkanals 16 in den Innenraum 19 des Reglergehäuses 18 hinein. Das als Rohr mit Anlageelement 38 ausgebildete Mittel 23 leitet die Leckageflüssigkeit aus dem Ablaufkanal 16 in den Innenraum 19 und verhindert ein Eindringen eines Fluids in den Ablaufkanal 16, da das an der Oberfläche 26 fließende Fluid von dem Anlageelement 38 und dem vorstehenden Abschnitt des Mittels 23 von dem Ablaufkanal 16 abgeleitet und um das Rohr zu der Befestigungsfläche 20 des Reglergehäuses 18 fließt. Zwischen dem Anlageflansch und der Oberfläche 26 kann bei Bedarf ein Dichtelement vorgesehen werden oder das Anlageelement 38 selbst als Dichtelement ausgebildet sein, z.B. durch entsprechende Flächenpressung zwischen Oberfläche 26 und Anlageelement 38. Das rohrförmige Mittel 23 wird über einen Preßsitz mit dem Ablaufkanal 16 verbunden oder eingeklebt.

Die Fig. 3 zeigt ein rohrförmiges Mittel 23 entsprechend Fig. 2, mit dem Unterschied, daß die in den Innenraum 19 mündende Austrittsöffnung 29 unter einem Winkel, vorzugsweise parallel zur Oberfläche 26 verläuft. Durch die abgewinkelte Austrittsöffnung 29 wird die Leckageflüssigkeit definiert einem Abschnitt des Innenraums 19 des Reglergehäuses 18 zugeführt und ein Eindringen einer Flüssigkeit, insbesondere bei einer von der Einbaulage des Hydraulikaggregates abhängigen Strömungsrichtung 24, sicher verhindert, da auch bei größeren Flüssigkeitsmengen diese um das rohrförmige Mittel 23 herumgeleitet werden und an den Kanten der Austrittsöffnung 29 abfließen.

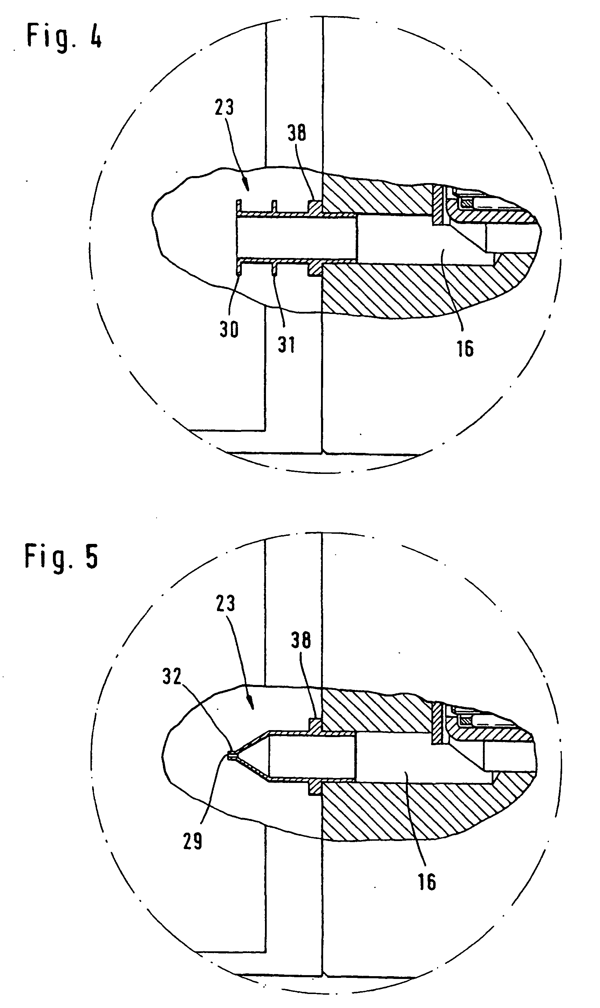

In Fig. 4 ist das in Fig. 2 dargestellte rohrförmige Mittel mit Abtropfkanten 30,31 versehen, die vorzugsweise in vorgegebenen Abständen am Umfang des rohrförmigen Mittels 23 kreisringförmig angeordnet sind. Die Abtropfkanten 30 und 31 bewirken ein gezieltes Abfließen der Flüssigkeit vom Mittel 23.

In Fig. 5 ist eine Ausführungsform dargestellt, die sich gegenüber der in Fig. 2 dargestellten Ausbildung durch ein an der Austrittsöffnung 29 vorgesehenes Absperrorgan unterscheidet. Das Absperrorgan 32 ist als Reduzierstück ausgebildet, welches den Querschnitt der Austrittsöffnung 29 verringert und somit das Eindringen einer Flüssigkeit verhindert.

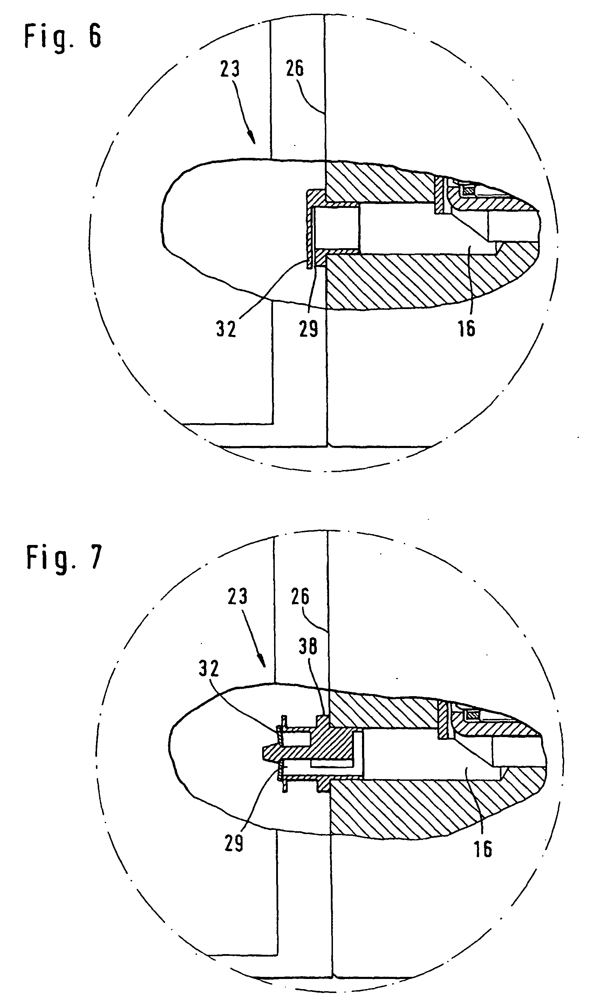

In Fig. 6 ist die Austrittsöffnung als Spalt oder Labyrinth ausgebildet, welche unter einem Winkel, vorzugsweise mit parallel zur Oberfläche 26 verlaufender Austrittsöffnung 29 ausgebildet ist.

Fig. 7 zeigt eine weitere alternative Ausführungsform, bei der das rohrförmige Mittel 23 mit einem als Ventil ausgebildeten Absperrorgan 32 versehen ist. Das Absperrorgan 32 ist bevorzugt als Rückschlagventil ausgebildet und ermöglicht so den Abfluß der Leckageflüssigkeit in den Innenraum 19 bei gleichzeitiger Verhinderung des Eintritts einer Flüssigkeit, die entlang der Oberfläche 26 fließt.

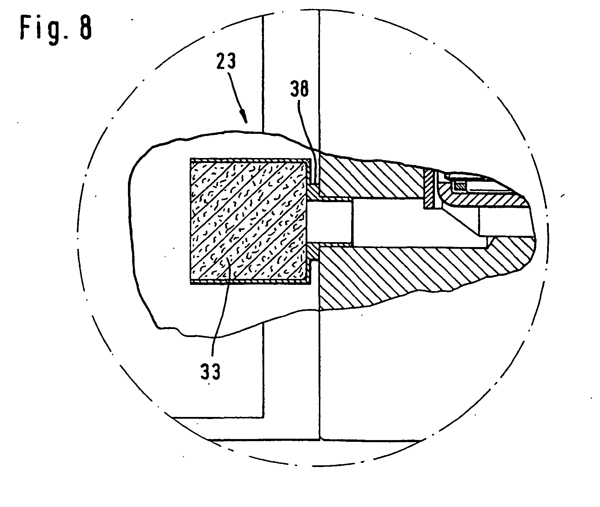

In Fig. 8 ist das rohrförmige Mittel 23 mit einem Reservoir für die Aufnahme der Leckageflüssigkeit verbunden. Zur Aufnahme der Flüssigkeit dient vorzugsweise ein saugendes Medium (Filz oder ähnliches), dessen Oberfläche nach außen flüssigkeitsabweisend imprägniert ist.

## Patentansprüche

1. Hydraulikaggregat für eine hydraulische Steuerund/oder Regelvorrichtung, insbesondere für blockierschutzund/oder schlupfgeregelte Bremsanlagen, mit einer in einem Reglergehäuse (18) angeordneten Steuer- und Regelelektronik sowie mit einem mit dem Reglergehäuse (18) verbundenen Ventilblock (10), an dem wenigstens ein Antriebsmittel (12) für mindestens ein Druckerzeugerelement (15) angeordnet ist, wobei in dem Ventilblock (10) ein dem Druckerzeugerelement (15) zugeordneter Hohlraum (17) Leckageflüssigkeit des Druckerzeugerelements (15) aufnimmt und ein mit dem Hohlraum (17) verbundener Ablaufkanal (16) vorgesehen ist, **gekennzeichnet durch** ein rohrförmig ausgebildetes Mittel (23), das den Ablaufkanal (16) über ein Reservoir (33), das ein saugendes Medium für die Aufnahme von Leckageflüssigkeit aufweist, mit einem Innenraum (19) des Reglergehäuses (18) verbindet.

2. Hydraulikaggregat nach Anspruch 1, **dadurch gekennzeichnet, dass** die Oberfläche des Mediums nach außen flüssigkeitsabweisend imprägniert ist.

3. Hydraulikaggregat nach Anspruch 2, **dadurch gekennzeichnet, dass** als Medium Filz vorgesehen ist.

4. Hydraulikaggregat nach Anspruch 1, **dadurch gekennzeichnet, dass** das Mittel (23) einstückig mit dem Reglergehäuse (18) verbunden ist.

5. Hydraulikaggregat nach Anspruch 1, **dadurch gekennzeichnet, dass** das Mittel (23) lösbar mit dem Ventilblock (10) verbunden ist.

6. Hydraulikaggregat nach Anspruch 1, **dadurch gekennzeichnet, dass** das Mittel (23) in dem Ablaufkanal (16) angeordnet ist.

7. Hydraulikaggregat für eine hydraulische Steuerund/oder Regelvorrichtung, insbesondere für blockierschutzund/oder schlupfgeregelte Bremsanlagen, mit einer in einem Reglergehäuse (18) angeordneten Steuer- und Regelelektronik sowie mit einem mit dem Reglergehäuse (18) verbundenen Ventilblock (10), an dem wenigstens ein Antriebsmittel (12) für mindestens ein Druckerzeugerelement (15) angeordnet ist, wobei in dem Ventilblock (10) ein dem Druckerzeugerelement (15) zugeordneter Hohlraum (17) Leckageflüssigkeit des Druckerzeugerelements (15) aufnimmt und ein mit dem Hohlraum (17) verbundener Ablaufkanal (16) vorgesehen ist, **gekennzeichnet durch** ein rohrförmig ausgebildetes Mittel (23), das den Ablaufkanal (16) über ein Absperrorgan (32) mit einem Innenraum (19) des Reglergehäuses (18) verbindet.

8. Hydraulikaggregat nach Anspruch 7, **dadurch gekennzeichnet, dass** das rohrförmige Mittel (23) eine Abtropfkante aufweist.

## Claims

1. A hydraulic unit for a hydraulic control and/or regulating device, in particular for anti-lock and/or slip-controlled brake systems, comprising control and regulating electronics arranged in a control housing (18) as well as a valve block (10) that is connected to the control housing (18) and whereat at least one driving means (12) for at least one pressure-generating element (15) is arranged, and in the valve block (10) a cavity (17) associated with the pressure-generating element (15) takes up leakage fluid from the pressure-generating element (15) and a discharge channel (16) connected to the cavity (17) is provided, **characterized by** a tubular means (23) connecting the discharge channel (16) to an interior space (19) of the control housing (18) by way of a reservoir (33) including an aspirating medium for taking up leakage fluid.

2. A hydraulic unit according to Claim 1, **characterized in that** the surface of the medium is impregnated to be liquidproof to the outside.

3. A hydraulic unit according to Claim 2, **characterized in that** felt is provided as the medium.

4. A hydraulic unit according to Claim 1, **characterized in that** the means (23) is integrally connected to the control housing (18).

5. A hydraulic unit according to Claim 1, **characterized in that** the means (23) is detachably connected to the valve block (10).

6. A hydraulic unit according to Claim 1, **characterized in that** the means (23) is arranged in the discharge channel (16).

7. A hydraulic unit for a hydraulic control and/or regulating device, in particular for anti-lock and/or slip-controlled brake systems, comprising control and regulating electronics arranged in a control housing (18) as well as a valve block (10) that is connected to the control housing (18) and whereat at least one driving means (12) for at least one pressure-generating element (15) is arranged, and in the valve block (10) a cavity (17) associated with the pressure-generating element (15) takes up leakage fluid from the pressure-generating element (15) and a discharge channel (16) connected to the cavity (17) is provided, **characterized by** a tubular means (23) connecting the discharge channel (16) to an interior space (19) of the control housing (18) by way of a shut-off device (32).

8. A hydraulic unit according to Claim 7, **characterized in that** the tubular means (23) includes a drip-off edge.

## Revendications

1. Groupe hydraulique pour un dispositif hydraulique de commande et/ou de régulation, en particulier pour des systèmes de freinage avec protection contre le blocage et/ou régulation du glissement, comportant une électronique de commande et de régulation disposée dans un boîtier de régulateur (18) ainsi qu'un bloc-soupapes (10) relié au boîtier de régulateur (18) et sur lequel est disposé au moins un moyen d'entraînement (12) pour au moins un élément de génération de pression (15), une cavité (17), associée à l'élément de génération de pression (15) dans le bloc-soupapes (10), recevant le liquide de fuite de l'élément de génération de pression (15), et un canal d'évacuation (16), relié à la cavité (17), étant prévu, **caractérisé par** un moyen (23) de forme tubulaire qui relie le canal d'évacuation (16), par un réservoir (33) comportant un milieu absorbant pour recevoir le liquide de fuite, à un volume intérieur (19) du boîtier de régulateur (18).

2. Groupe hydraulique selon la revendication 1, **caractérisé en ce que** la surface du milieu est imprégnée de manière à repousser les liquides vers l'extérieur.

3. Groupe hydraulique selon la revendication 2, **caractérisé en ce que** du feutre est prévu comme milieu.

4. Groupe hydraulique selon la revendication 1, **caractérisé en ce que** le moyen (23) est relié d'une seule pièce au boîtier de régulateur (18).

5. Groupe hydraulique selon la revendication 1, **caractérisé en ce que** le moyen (23) est relié de façon séparable au bloc-soupapes (10).

6. Groupe hydraulique selon la revendication 1, **caractérisé en ce que** le moyen (23) est disposé dans le canal d'évacuation (16).

7. Groupe hydraulique pour un dispositif hydraulique de commande et/ou de régulation, en particulier pour des systèmes de freinage avec protection contre le blocage et/ou régulation du glissement, comportant une électronique de commande et de régulation disposée dans un boîtier de régulateur (18) ainsi qu'un bloc-soupapes (10) relié au boîtier de régulateur (18) et sur lequel est disposé au moins un moyen d'entraînement (12) pour au moins un élément de génération de pression (15), une cavité (17), associée à l'élément de génération de pression (15) dans le bloc-soupapes (10), recevant le liquide de fuite de l'élément de génération de pression (15), et un canal d'évacuation (16), relié à la cavité (17), étant prévu, **caractérisé par** un moyen (23) de forme tubulaire qui relie le canal d'évacuation (16), par un organe d'arrêt (32), à un volume intérieur (19) du boîtier de régulateur (18).

8. Groupe hydraulique selon la revendication 7, **caractérisé en ce que** le moyen (23) de forme tubulaire présente une arête d'égouttage.
